# FASCICULE DE BREVET EUROPEEN

(11) **EP 3 144 190 B1**
(45) Date de publication et mention de la délivrance du brevet: **02.01.2019**
(21) Numéro de dépôt: 16188973.8
(22) Date de dépôt: 15.09.2016
(51) Int. Cl.: B60S 1/48, B60S 1/08

(54) **PROCÉDÉ ET DISPOSITIF DE DÉGIVRAGE D'UNE VITRE DE VÉHICULE**
VERFAHREN UND VORRICHTUNG ZUR ENTEISUNG EINER FAHRZEUGSCHEIBE
METHOD AND DEVICE FOR DE-ICING A VEHICLE WINDOW

(30) Priorité: 15.09.2015 FR 1558608
(43) Date de publication de la demande: 22.03.2017
(73) Titulaire: Valeo Systèmes d'Essuyage, 78322 Le Mesnil Saint Denis (FR)
(72) Inventeur: KOLANOWSKI, Grégory, 43300 SIAUGUES SAINTE MARIE (FR); THEBAULT, Denis, 63370 LEMPDES (FR)
(74) Mandataire: Callu-Danseux, Violaine

(56) Documents cités:
- EP-A1- 1 514 753
- WO-A1-2009/092669
- DE-A1-102009 051 263
- FR-A1- 2 789 034

## Description

### DOMAINE TECHNIQUE

Le secteur technique de la présente invention est celui des procédés de dégivrage d'une vitre d'un véhicule, notamment automobile, en utilisant un dispositif de dégivrage de ladite vitre.

### ETAT DE L'ART

Les automobiles sont couramment équipées de systèmes d'essuyage et de lavage de vitres pour assurer un essuyage et un lavage des vitres et éviter ainsi que la vision qu'a le conducteur de son environnement ne soit perturbée. Une telle installation comprend généralement deux balais d'essuyage qui raclent la surface extérieure de la vitre, telle que le pare-brise, de manière à évacuer l'eau présente sur cette surface. Des gicleurs sont positionnés au niveau du capot du véhicule ou, dans une version plus récente, sur les balais, et sont alimentés en liquide lave-glace par l'intermédiaire d'une pompe et d'un système de canalisation reliés à un réservoir de liquide lave-glace.

Certaines automobiles sont équipées de systèmes de dégivrage. Un système de dégivrage comprend en général un système d'essuyage et de lavage classique du type précité, et comprend en plus un réservoir de liquide de dégivrage voire une pompe supplémentaire. Dans le but de dégivrer une vitre par temps froid, les gicleurs sont alimentés en liquide de dégivrage par l'intermédiaire de la pompe et du système de canalisation reliés au réservoir de liquide de dégivrage.

La Demanderesse a déjà proposé des systèmes et des dispositifs de dégivrage, décrits dans notamment dans le document FR-A1-2 789 034.

De manière connue, le liquide de dégivrage a une viscosité qui augmente avec la baisse de la température. Ainsi, plus la température extérieure est faible et plus le liquide de dégivrage est visqueux. La viscosité de ce liquide à -5°C peut par exemple être deux fois plus faible que celle du liquide à -20°C. Cette différence de viscosité a un impact direct sur le débit de liquide projeté par les gicleurs.

On a également constaté que les performances d'une pompe sont influencées par la température extérieure, et diminuent par temps froid. Ces deux facteurs ont une influence significative sur les quantités de liquide de dégivrage projeté par temps froid. Il est ainsi nécessaire de trouver une solution pour garantir qu'une quantité minimale de liquide de dégivrage soit projetée, quelle que soit la température extérieure du véhicule, et que cette solution n'entraîne pas une surconsommation de liquide de dégivrage, qui est relativement coûteux.

L'invention apporte une solution à ce besoin, qui est simple, efficace et économique.

### EXPOSE DE L'INVENTION

L'invention propose à cet effet un procédé de dégivrage d'une vitre de véhicule, ledit véhicule étant équipé d'un dispositif de dégivrage comprenant :
a. au moins un réservoir contenant un liquide de dégivrage,
b. un système de canalisation reliant ledit au moins un réservoir à des orifices par lesquels est projeté ledit liquide sur ladite vitre,
c. une pompe destinée à faire circuler ledit liquide dans le système de canalisation jusqu'à son éjection par lesdits orifices, et
d. au moins un balai d'essuyage apte à se déplacer sur ladite vitre entre une position basse et une position haute,
e. un moteur d'entraînement en rotation dudit au moins un balai,
f. un capteur de température extérieure T au véhicule, et
g. un boîtier électronique de commande dudit moteur et d'actionnement de ladite pompe,
caractérisé en ce qu'il comprend une étape 1) consistant à:
éjecter du liquide par lesdits orifices et adapter la quantité Q de liquide projeté en fonction de ladite température extérieure, de façon à ce que :
   - lorsque ladite température extérieure est égale à T1, une quantité Q1 de liquide soit éjectée par lesdits orifices, et
   - lorsque la température extérieure est égale à T2, avec T2 < T1, une quantité Q2 de liquide soit éjectée par lesdits orifices, avec Q2 > Q1,
   cette étape 1) étant réalisée en régulant une vitesse V de rotation dudit au moins un balai, de façon à ce que:
   - lorsque ladite température extérieure est égale à T1, une vitesse V1 est appliquée audit au moins un balai,
   - lorsque la température extérieure est égale à T2, une vitesse V2 est appliquée audit au moins un balai, avec V2>V1;
ou l'étape 1) du procédé consiste à éjecter du liquide par lesdits orifices et maintenir la quantité Q de liquide projeté constante quelle que soit ladite température extérieure, de façon à ce que :
   - lorsque ladite température extérieure est égale à T1 et ledit liquide a une viscosité W1, la quantité de liquide Q soit éjectée par lesdits orifices, et
   - lorsque la température extérieure est égale à T2, avec T2 < T1, et ledit liquide a une viscosité W2, avec W2 > W1, la même quantité de liquide Q soit éjectée par lesdits orifices.

L'invention propose ainsi soit d'adapter la quantité de liquide de dégivrage projeté en fonction de la température extérieure, soit de maintenir la quantité de liquide projeté constante quelle que soit la température extérieure. Dans le premier cas de figure, la quantité de liquide projeté augmente lorsque la température extérieure est très basse.

La régulation de la quantité de liquide en fonction de la température extérieure permet de résoudre le problème technique précité de surconsommation de liquide car la quantité de liquide projeté est optimisée pour dégivrer la vitre exposée à une température extérieure donnée.

Le maintien sensiblement constant de la quantité de liquide projeté quelle que soit la température extérieure permet de résoudre le problème technique précité d'influence de la température extérieure sur la viscosité du liquide. Quelle que soit la viscosité du liquide, la quantité projetée est la même pour dégivrer la vitre.

Le procédé selon l'invention peut comprendre une ou plusieurs des caractéristiques, étapes ou sous-étapes suivantes, prises isolément les unes des autres ou en combinaison les unes avec les autres :
2) amener ledit au moins un balai de ladite position basse jusqu'à ladite position haute, par plusieurs déplacements angulaires successifs,
   lesdites étapes 1) et 2) pouvant notamment se dérouler simultanément ;
   - ledit moteur étant configuré pour que la vitesse V de rotation dudit au moins un balai et la quantité de liquide éjecté par ladite pompe soient contrôlées par une modulation de la largeur et/ou de l'amplitude d'impulsion de leurs signaux de commande, l'étape 2) est réalisée par plusieurs impulsions successives du signal de commande dudit moteur, et l'étape 1) est réalisée par plusieurs impulsions successives du signal de commande de ladite pompe ;
   - l'adaptation à l'étape 1) est réalisée en régulant la largeur et/ou l'amplitude d'impulsion du signal de commande de ladite pompe, de façon à ce que :
      - lorsque ladite température extérieure est égale à T1, une largeur Θ1 et/ou l'amplitude LI1 d'impulsion dudit signal soi(en)t appliquée(s) à ladite pompe,
      - lorsque la température extérieure est égale à T2, une largeur Θ2 et/ou l'amplitude LI2 d'impulsion dudit signal soi(en)t appliquée(s) à ladite pompe, avec Θ2 > Θ1 et LI2 > LI1 ;
   - l'adaptation à l'étape 1) est réalisée en régulant la vitesse V de rotation dudit au moins un balai, de façon à ce que :
      - lorsque ladite température extérieure est égale à T1, une vitesse V1 est appliquée audit au moins un balai,
      - lorsque la température extérieure est égale à T2, une vitesse V2 est appliquée audit au moins un balai, avec V2 < V1 ;
   - T1 est comprise entre -5°C et +5°C, de préférence entre -2°C et +2°C, et est par exemple de 0°C ;
   - T2 est comprise entre -10°C et -30°C, de préférence entre -15°C et -25°C, et est par exemple de -20°C ;
   - Θ2 = k.Θ1, avec k un coefficient ;
   - V1 = k.V2, avec k un coefficient ;
   - k est compris entre 1,5 et 3, et est par exemple de 2 ;
   - les étapes 1) et 2) sont réalisées lorsque le véhicule est à l'arrêt, c'est-à-dire lorsque la vitesse du véhicule est nulle ;
   - les étapes 1) et 2) sont suivies des étapes consistant à :
3) amener ledit au moins un balai de ladite position haute jusqu'à ladite position basse, par un unique déplacement angulaire, et
4) éjecter du liquide par lesdits orifices pendant ledit déplacement, et adapter la quantité Q de liquide projeté en fonction de ladite température extérieure, de façon à ce que :
   - lorsque ladite température extérieure est égale à T1, une quantité Q1 de liquide soit éjectée par lesdits orifices lors dudit déplacement,
   - lorsque la température extérieure est égale à T2, avec T2 < T1, une quantité Q2 de liquide soit éjectée par lesdits orifices lors dudit déplacement, avec Q2 > Q1 ;
   - pendant les étapes 3) et 4), ladite pompe est commandée par une impulsion de son signal de commande de largeur et d'amplitude prédéterminées ;
   - l'adaptation à l'étape 4) est réalisée en régulant la vitesse V de rotation dudit au moins un balai, de façon à ce que :
      - lorsque ladite température extérieure est égale à T1, une vitesse V1 est appliquée audit au moins un balai,
      - lorsque la température extérieure est égale à T2, une vitesse V2 est appliquée audit au moins un balai, avec V2 < V1.

La présente invention concerne également un dispositif de dégivrage d'une vitre de véhicule, comprenant :
a. au moins un réservoir (3) contenant un liquide de dégivrage,
b. un système de canalisation (5) reliant ledit au moins un réservoir à des orifices (15) par lesquels est projeté ledit liquide sur ladite vitre (10),
c. une pompe (22) destinée à faire circuler ledit liquide dans le système de canalisation (5) jusqu'à son éjection par lesdits orifices (15), et
d. au moins un balai d'essuyage (30) apte à se déplacer sur ladite vitre (10) entre une position basse (PB) et une position haute (PH),
e. un moteur (40) d'entraînement en rotation dudit au moins un balai,
f. un capteur de température extérieure T au véhicule, et
g. un boîtier électronique de commande dudit moteur et d'actionnement de ladite pompe,
caractérisé en ce que ledit boîtier électronique est configurée pour réaliser les étapes du procédé selon l'une des revendications précédentes.

### DESCRIPTION DES FIGURES

D'autres caractéristiques et avantages de l'invention apparaîtront à la lecture de la description qui suit et d'exemples de réalisation donnés à titre illustratif en référence aux figures annexées. Sur ces figures :
- la figure 1 est une vue schématique d'un dispositif de lavage et de dégivrage d'une vitre, ici de véhicule automobile ;
- les figures 2 et 3 sont des vues schématiques montrant un cycle de dégivrage de la vitre ;
- les figures 4a, 4b et 4c sont des graphiques illustrant les différentes étapes d'un mode de réalisation du procédé de dégivrage selon l'invention ;
- les figures 5a et 5b sont des graphiques illustrant les différentes étapes d'une variante de réalisation du procédé de dégivrage selon l'invention ; et
- les figures 6a-6b et 7a-7b sont des graphiques illustrant d'autres variantes de réalisation du procédé de dégivrage selon l'invention.

### DESCRIPTION DETAILLEE

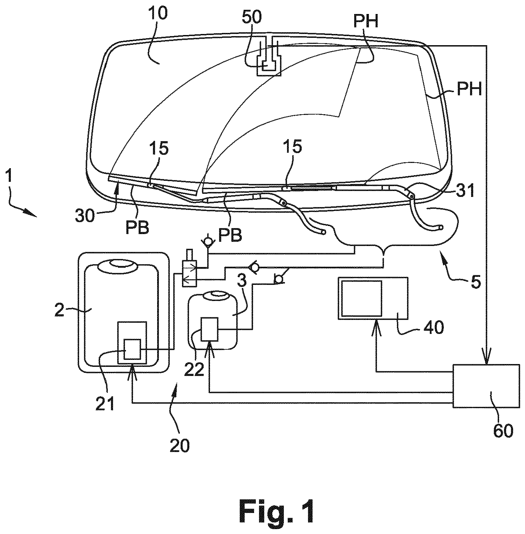

Le procédé de dégivrage de l'invention utilise un dispositif de dégivrage 1 appliqué sur une vitre, telle qu'un pare-brise 10 de véhicule automobile, comme illustré à la figure 1.

Un tel dispositif comprend un premier réservoir 2 contenant un liquide de lavage, et un deuxième réservoir 3 contenant un liquide de dégivrage.

Le dispositif de lavage 1 comprend également un système de canalisation 5 reliant le premier réservoir 2 et le deuxième réservoir 3 à des orifices 15 par lesquels sont éjectés du liquide de lavage et/ou du liquide de dégivrage sur le pare-brise 10. Il comprend en outre un système de pompe 20 destiné à faire circuler du liquide de lavage et/ou du liquide de dégivrage dans le système de canalisation 5 jusqu'à éjection par les orifices 15.

Le système de pompe 20 comprend ici deux pompes 21, 22 indépendantes. Une première pompe 21 est associée au premier réservoir 2 et est destinée à faire circuler du liquide de lavage dans le système de canalisation 5 et une deuxième pompe 22 est associée au deuxième réservoir 3 et est destinée à faire circuler du liquide de dégivrage dans le système de canalisation 5.

Le dispositif de dégivrage 1 comprend au moins un balai d'essuyage 30 monté sur un bras 31 et apte à se déplacer sur le pare-brise 10 entre une position basse PB et une position haute PH, et inversement. Dans l'exemple représenté, le dispositif 1 comprend deux balais d'essuyage 30.

Les orifices 15 précités sont, ici, situés tout le long des balais d'essuyage 30. Les orifices 15 sont disposés de manière à projeter du liquide de lavage et/ou du liquide de dégivrage vers le haut des balais d'essuyage 30, c'est-à-dire vers le haut du pare-brise 10. Le système pourrait aussi bien être mis en oeuvre avec des orifices 15 situés des deux côtés des balais d'essuyage, la projection de liquide s'effectuant alors soit uniquement dans le sens de la montée, soit uniquement du côté d'avancement du balai. Il est également possible que les orifices 15 situés des deux côtés des balais d'essuyage 30 projettent simultanément le liquide.

Le dispositif 1 comprend également un moteur 40 destiné à entraîner les balais d'essuyage 30 entre leurs positions basses et leurs positions hautes respectives. Le dispositif 1 comprend en outre un capteur 50 de température extérieure du véhicule. Il est situé ici sur une partie haute du pare-brise, au centre de celui-ci, sans que cette position ne soit limitative. Le capteur 50 peut être directement exposé à l'air ambiant extérieur du véhicule et est destiné à mesurer la température extérieure, par exemple dans une plage de valeurs allant de -50°C à +50°C.

Le dispositif de dégivrage 1 comprend de plus un boitier électronique 60 capable de commander le moteur 40 d'entraînement des balais d'essuyage 30 et l'activation du système de pompe 20, les pompes 21, 22 pouvant être commandées de manière indépendante. Dans la suite de la description de l'invention, le moteur 40 d'entraînement des balais d'essuie-glace et la deuxième pompe 22 d'alimentation en liquide de dégivrage sont choisis comme étant des moteurs ou des pompes du type pas à pas à courant continu, ou du type réversible, dont la vitesse de rotation pour l'un et la pression de sortie ou la quantité de liquide évacué pour l'autre, sont contrôlées par une modulation de la largeur d'impulsion de leurs signaux de commande. Tout autre dispositif peut être envisagé pour autant que cette vitesse et/ou cette pression/quantité, soient modulables.

Le boîtier 60 est également relié au capteur 50 et reçoit la température mesurée de façon à adapter au moins l'un des paramètres précités (vitesse et/ou pression/quantité) en conséquence.

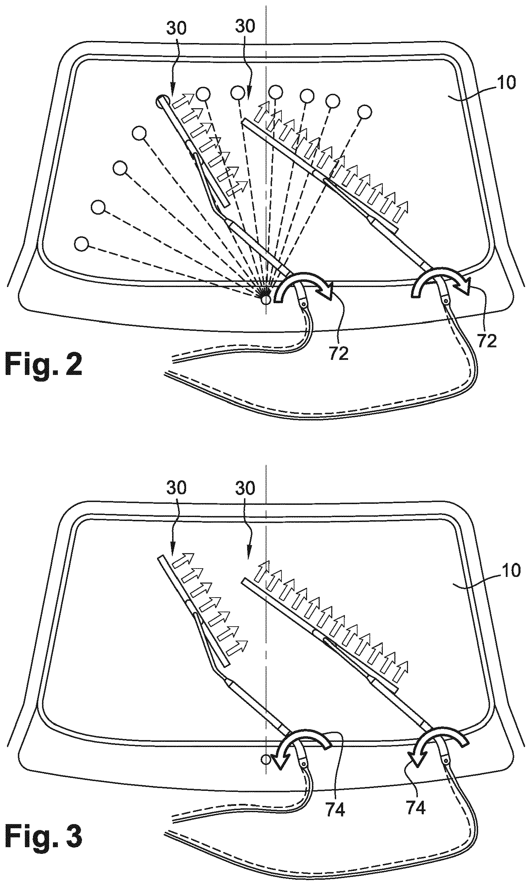

Les figures 2 et 3 représentent un cycle de dégivrage du pare-brise 10. Ce cycle comprend une montée des balais 30, c'est-à-dire leur déplacement de leurs positions basses à leurs positions hautes (figure 2 et flèches 72), et une descente des balais, c'est-à-dire leur déplacement de leurs positions hautes à leurs positions basses (figure 3 et flèches 74).

La montée de chaque balai 30 est réalisée par une succession de petits déplacements élémentaires ou angulaires, qui sont au nombre de dix dans l'exemple représenté. Les positions angulaires de départ et d'arrivée pour chacun de ces déplacements sont représentées schématiquement par des lignes en traits pointillés en figure 2, seulement pour l'un des balais (celui de gauche sur le dessin). La surface du pare-brise 10 balayée par chaque balai est ainsi divisée en une succession de secteurs angulaires.

La descente de chaque balai 30 est réalisée par un unique déplacement (figure 3). Les positions angulaires de départ et d'arrivée pour ce déplacement correspondent donc respectivement aux positions haute et basse de chaque balai.

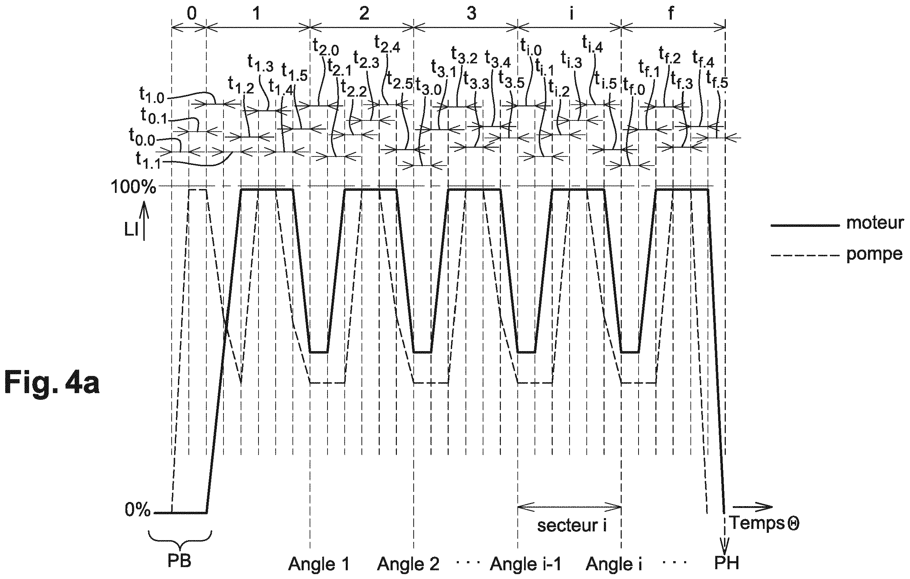

La figure 4a représente un procédé de dégivrage d'une vitre, et est illustré par un graphe dans lequel sont représentés, en abscisses le temps ou la largeur d'impulsion Θ, et en ordonnées l'amplitude (LI) des signaux de commande, à savoir le signal de commande du moteur d'entraînement 40 des balais 30 (ligne continue) et le signal de commande de la pompe 22 d'alimentation des gicleurs 15 en liquide de dégivrage (ligne discontinue).

On voit que la rotation d'un balai entre sa position basse PB et sa position haute PH (montée) est découpée en une succession de secteurs angulaires qui correspondent aux secteurs angulaires précités (dont le nombre est de cinq dans l'exemple illustré), et donc d'impulsions des signaux de commande.

La description du fonctionnement du moteur d'entraînement 40 et de la pompe de dégivrage 22 va être donnée en référence à un secteur élémentaire donné "i", qui s'étend entre un angle i-1 et un angle i, mesurés à partir de la position basse PB. Le pilotage du moteur d'entraînement 40 et de la pompe d'alimentation 22 sont identiques sur les autres secteurs, ce schéma de pilotage se répétant sur toute l'amplitude angulaire de balayage par les balais 30, à l'exception du premier secteur référencé 0 et du secteur final référencé f, pour lesquels le pilotage de ces deux équipements sera décrit plus loin.

Au début du secteur élémentaire i, c'est-à-dire au niveau de l'angle i-1, la vitesse du moteur d'entraînement 40 et la quantité éjectée de liquide par la pompe d'alimentation 22 sont réduites par un signal de commande dont l'amplitude d'impulsion (LI) est respectivement de 50% pour le moteur et de 40% pour la pompe, de leur valeur maximale. Ces valeurs réduites sont maintenues pendant une durée ti.0.

Puis, au bout du temps ti.0, l'amplitude d'impulsion envoyée à la commande du moteur d'entraînement 40 est portée progressivement à 100%, sur une largeur ou durée (Θ) ti.1, qui correspond à la vitesse maximale de réponse à la commande de variation du régime du moteur. Cette amplitude d'impulsion est ensuite maintenue à 100% pendant une durée égale à la somme de trois durées ti.2, ti.3 et ti.4. Pendant tout ce temps, la vitesse de rotation du moteur d'entraînement 40 est maximale, c'est-à-dire, par exemple, qu'elle est égale à sa valeur nominale de rotation au cours d'une utilisation des balais pour l'essuyage du pare-brise. Au-delà de ce temps ti.4, l'amplitude d'impulsion est ramenée à sa valeur réduite de 50%, et ce, pendant une durée ti.5.

Parallèlement, l'amplitude d'impulsion donnée au signal de commande de la pompe d'alimentation 22 reste à sa valeur réduite de 40% pendant la première durée ti.1, en prolongation de la durée initiale ti.0. Elle est ensuite portée progressivement à 100%, pendant une durée ti.2, qui correspond à la vitesse maximale de réponse de la commande de la pompe. L'amplitude d'impulsion est ensuite maintenue à 100% pendant une durée égale à la durée ti.3. Pendant tout ce temps, la quantité de liquide éjecté par la pompe d'alimentation 22 est maximale, c'est-à-dire, par exemple, qu'elle est égale à sa pression nominale au cours d'une utilisation des balais pour le lavage du pare-brise (hors mise en oeuvre de la fonction de dégivrage).

Au-delà de ce temps, et pendant une durée ti.4, qui correspond au temps de réponse du boîtier de commande de la pompe, l'amplitude d'impulsion est ramenée initialement à une première valeur réduite, égale à 60% de la valeur maximale, puis au cours d'une durée ti.5, à une valeur encore plus réduite, égale à 40% de la valeur maximale de l'amplitude d'impulsion. Au bout de ce temps ti.5, les amplitudes d'impulsion du moteur d'entraînement 40 et de la pompe d'alimentation 22 sont revenues aux valeurs qu'elles avaient en début du secteur i, et peuvent suivre un nouveau cycle, sur un secteur i+1.

Tous ces cycles, identiques, sont précédés d'un cycle d'amorçage, référencé "0" et d'un cycle d'achèvement référencé "f".

Dans la position de repos des balais, au début du cycle d'amorçage, les balais sont immobiles dans leurs positions basses, le moteur d'entraînement et la pompe d'alimentation étant à l'arrêt du fait d'une amplitude d'impulsion transmise à leur système de commande qui est égale à zéro. Pendant un temps t0.0, alors que le moteur d'entraînement 40 est maintenu à l'arrêt, l'amplitude d'impulsion de la commande de la pompe d'alimentation 22 est progressivement amenée à 100%, cette durée t0.0 correspondant à la vitesse maximale d'accroissement de l'amplitude d'impulsion entre 0 et 100%. Cette amplitude d'impulsion de 100% est maintenue pendant une durée t0.1, le temps que le liquide de dégivrage se répande sur la partie basse du pare-brise et fasse fondre la glace qui a pu s'y accumuler et bloquer les balais 15. Au bout de ce temps t0.1, et pendant une durée égale à t1.0 et t1.1, le moteur d'entraînement 40 est mis en route par un passage progressif de l'amplitude d'impulsion de son signal de commande de 0 à 100%. Parallèlement, l'amplitude d'impulsion de la pompe d'alimentation 22 est réduite de 100% vers 60%, puis à 40% au cours respectivement des deux temps t1.0 et t1.1 qui correspondent aux deux premiers temps du premier cycle de dégivrage, ce cycle étant mis en oeuvre sur le secteur angulaire dont la valeur i est égale à 1. Le raccordement entre le cycle d'amorçage et le premier cycle s'effectue en choisissant de façon appropriée les durées t1.0 et t1.1. La durée t1.0 est telle que l'amplitude d'impulsion du moteur arrive approximativement à 50% au bout de ce temps. Quant à la durée t1.1, elle est choisie de façon que, au bout de ce temps, simultanément l'amplitude d'impulsion du moteur d'entraînement 40 arrive à 100% et celle de la pompe d'alimentation 22 arrive à la valeur de 40%.

Avant d'initier le cycle d'achèvement "f", l'amplitude d'impulsion de la commande du moteur et l'amplitude d'impulsion de la commande de la pompe d'alimentation 22 sont toutes les deux à 100% au bout du temps tf.3. Ces amplitudes vont alors être réduites séparément, tout d'abord l'amplitude d'impulsion du signal de commande de la pompe d'alimentation 22, va être portée à zéro et donc à l'arrêt complet de la pompe d'alimentation au bout d'un temps tf.4. De même, la réduction de l'amplitude d'impulsion du moteur d'entraînement 40 va être portée à la valeur zéro et donc à l'arrêt complet de ce moteur entre la fin du temps tf.4 et la fin du temps tf.5.

Le cycle de dégivrage sur un aller du balai est alors terminé et ce dernier peut alors être ramené vers sa position basse PB par un uniquement déplacement comme évoqué dans ce qui précède. Le balayage de retour peut être utilisé pour purger le système de canalisation 5 de son liquide de dégivrage, par une mise en fonctionnement de la pompe de lavage 21. Le liquide projeté au cours de cette phase de descente du balai fournit avantageusement une pellicule de protection au pare-brise, ce qui évite la réapparition de givre sur le celui-ci. Puis, en fonction de la situation du pare-brise, un nouveau cycle de dégivrage peut alors être mis en oeuvre au cours de la montée suivante du balai.

Le fonctionnement du cycle de dégivrage d'un pare-brise se présente ainsi, hors les cycles d'amorçage et d'achèvement :
Le secteur angulaire qui est balayé par chacun des balais est découpé en secteurs élémentaires consécutifs. Les amplitudes d'impulsion des signaux de commande correspondent à l'efficacité nécessaire pour l'étalement d'une quantité donnée de liquide de dégivrage sur chaque secteur élémentaire et son imprégnation de la glace. Le moteur d'entraînement 40 est successivement porté à sa vitesse maximale, par une montée à 100% de l'amplitude d'impulsion de son signal de commande, puis maintenu à cette valeur pendant plusieurs durées ti.2, ti.3 et ti.4. La durée ti.2 correspond à la durée nécessaire pour porter l'amplitude d'impulsion du signal de commande de la pompe d'alimentation 22 de sa valeur réduite à celle de 100%. La durée ti.3 correspond au temps nécessaire pour que la quantité recherchée de liquide de dégivrage soit délivrée aux orifices 15 du balai. Enfin la durée ti.4 correspond à la durée de ralentissement de la pompe qui résulte de la réduction de l'amplitude d'impulsion de son signal de commande de 100% à 60%, une amplitude d'impulsion de son signal de commande de 40% étant atteint à la fin du temps ti.5. Pendant la durée ti.4, du liquide de dégivrage est encore envoyé en abondance par la pompe d'alimentation et la vitesse de rotation du moteur 40 d'entraînement des balais est maintenue à sa valeur maximale. On note que le moteur d'entraînement 40 est toujours à son régime maximum lorsque la pompe d'alimentation 22 est portée à sa pression de sortie maximale, pour assurer une bonne répartition du liquide de dégivrage sur le secteur élémentaire considéré. Par ailleurs la durée pendant laquelle la pompe d'alimentation 22 est à sa pression maximale est plus courte que celle de régime maximum du moteur 40, cette durée étant précédée et suivie par une période de rotation maximale du moteur d'entraînement. La séquence de ces périodes de régime et de pression de sortie maximales assure une bonne distribution du liquide de dégivrage, avec une efficacité optimale pour l'imprégnation de la glace, et avec pour résultat une réduction de la quantité nécessaire.
L'amplitude d'impulsion du signal de commande du moteur d'entraînement 40 est ensuite amenée à une valeur réduite (typiquement 50%, sans que cette valeur soit impérative) qui correspond à une rotation plus lente du balai. Cette vitesse réduite correspond à une phase d'étalement du liquide de dégivrage sur le secteur élémentaire considéré et d'imprégnation de la glace, pour laisser à ce liquide le temps d'agir.
Les amplitudes d'impulsion du moteur d'entraînement 40 et de la pompe d'alimentation 22 sont maintenues quelque temps à leurs valeurs réduites avant de relancer un nouveau cycle de dégivrage sur le secteur élémentaire suivant, avec une relance de l'amplitude d'impulsion du moteur d'entraînement, puis de celle de la pompe d'alimentation.
En fin de cycle de dégivrage, quand le balai arrive à proximité de son point haut PH, le cycle sur le dernier secteur élémentaire "f" consiste simplement à ramener les amplitudes d'impulsion des signaux de commande des deux équipements vers zéro, en stoppant la délivrance du liquide de dégivrage et en arrêtant la rotation du moteur d'entraînement.

La figure 4a représente un cycle de dégivrage qui est contrôlé par le boîtier électronique 60 du dispositif de dégivrage 1. Le boîtier 60 est configuré pour adapter la quantité de liquide projeté en fonction de la température extérieure au véhicule mesurée par le capteur 60, de façon à ce que :
- lorsque la température extérieure est égale à T1, une quantité Q1 de liquide soit éjectée par les orifices lors de chaque déplacement élémentaire des balais,
- lorsque la température extérieure est égale à T2, avec T2 < T1, une quantité Q2 de liquide soit éjectée par ces orifices lors de chaque déplacement élémentaire, avec Q2 > Q1.

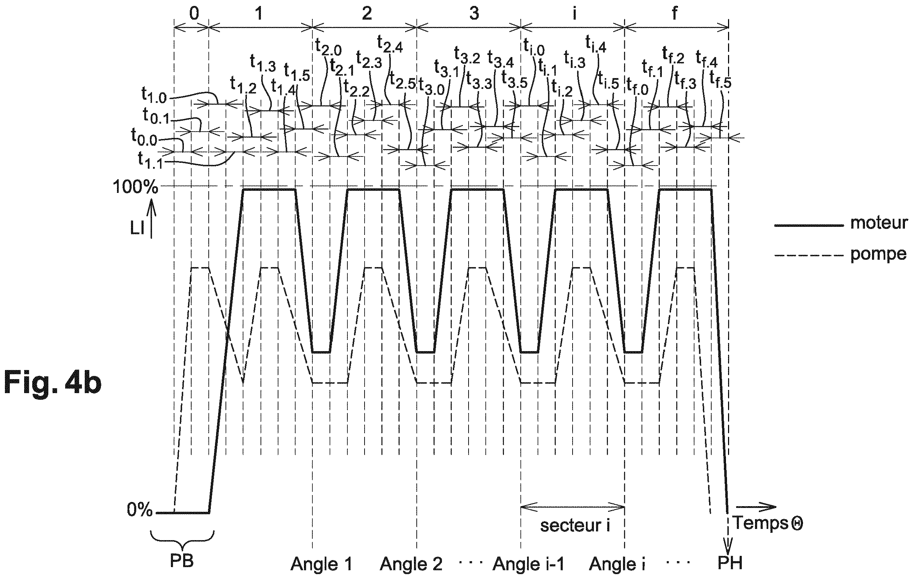

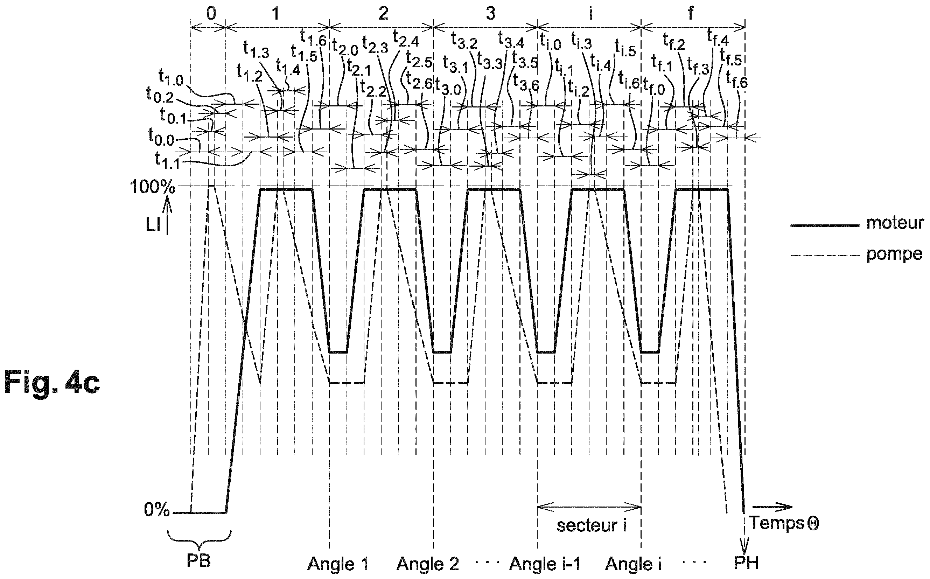

Dans le cas où la figure 4a représenterait un cycle de dégivrage par temps très froid, par exemple à une température T2 de -20°C, le boîtier 60 pourrait être configuré pour mettre en oeuvre le cycle de dégivrage de la figure 4b ou 4c lorsque la température est moins froide, et est par exemple de T1 = 0°C.

La différence essentielle entre le cycle de dégivrage de la figure 4b et celui de la figure 4a concerne l'amplitude (LI) des impulsions du signal de commande de la pompe. Bien que la valeur maximale de l'amplitude des impulsions du signal de commande du moteur soit maintenue à 100%, comme dans le précédent cycle de la figure 4a, c'est-à-dire que la vitesse de balayage du pare-brise est inchangée, la valeur maximale de l'amplitude des impulsions du signal de commande de la pompe est réduite à 75% (contre 100% dans le cycle de la figure 4a), ce qui se traduit par une quantité de liquide projeté par la pompe qui est plus faible dans le cycle de la figure 4b que dans celui de la figure 4a. Ainsi, pour chaque déplacement élémentaire des balais, la quantité de liquide projeté sera plus faible à T1=0°C qu'elle ne l'est à T2=-20°C. La quantité de liquide utilisée dépend ainsi de la température extérieure pour optimiser le dégivrage du véhicule sans entraîner une surconsommation du liquide de dégivrage.

La différence essentielle entre le cycle de dégivrage de la figure 4c et celui de la figure 4a concerne la largeur (Θ) des impulsions du signal de commande de la pompe. Bien que la durée de maintien de l'amplitude maximale des impulsions du signal de commande du moteur soit identique à celle dans le cycle de la figure 4a, la durée de maintien de l'amplitude maximale des impulsions du signal de commande de la pompe est réduite de manière significative, ce qui se traduit par une quantité de liquide projeté par la pompe qui est plus faible dans le cycle de la figure 4c que dans celui de la figure 4a. Ainsi, pour chaque déplacement élémentaire des balais, la quantité de liquide projeté sera plus faible à T1=0°C qu'elle ne l'est à T2=-20°C.

Le boîtier électronique 60 peut être configuré pour mettre en oeuvre le cycle de la figure 4b ou 4c, d'une part, à la température T1, qui pourrait être considéré comme un cycle de dégivrage standard ou par défaut, par temps froid, ainsi que pour mettre en oeuvre le cycle de la figure 4a, d'autre part, à la température T2, qui pourrait être considéré comme un cycle de dégivrage par temps très froid.

Dans le cas de figure précité où les températures T1 et T2 sont respectivement de 0°C et de -20°C, les quantités de liquide projeté peuvent être respectivement de Q1 et Q2. Q2 = k.Q1, avec k un coefficient qui est de préférence égal à 2 dans ce cas particulier.

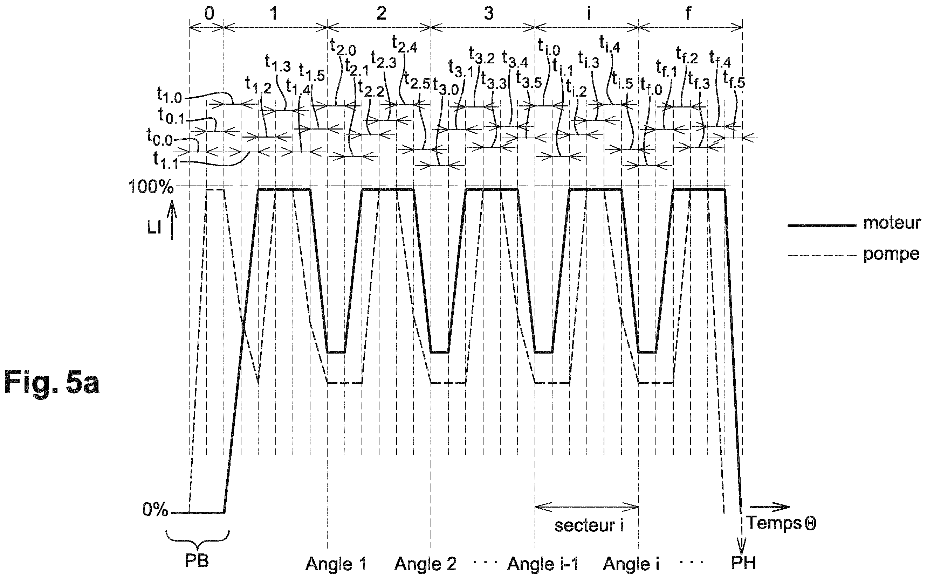

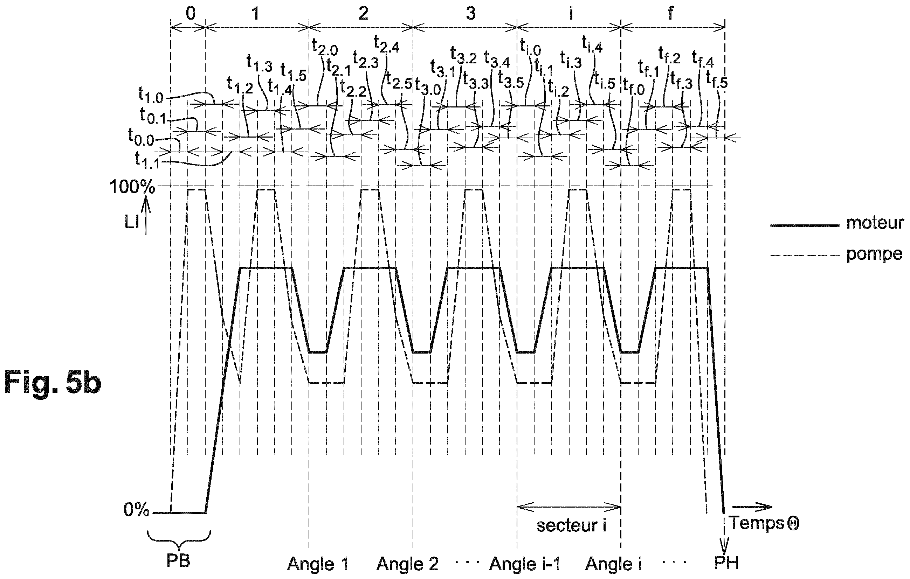

Les figures 5a et 5b représentent une variante de réalisation de l'invention, le cycle de la figure 5a étant identique à celui de la figure 4a.

Dans le cas où la figure 5a représenterait un cycle de dégivrage standard par temps froid, par exemple à une température T1 de 0°C, le boîtier 60 pourrait être configuré pour mettre en oeuvre le cycle de dégivrage de la figure 5b lorsque la température est plus froide, et est par exemple de T2 = -20°C.

La différence essentielle entre le cycle de dégivrage de la figure 5b et celui de la figure 5a concerne les amplitudes (LI) des impulsions des signaux de commande de la pompe et du moteur. La valeur maximale de l'amplitude des impulsions du signal de commande du moteur est réduite à 75% (contre 100% dans le cycle de la figure 5a), ce qui signifie que la vitesse de balayage du pare-brise est plus faible dans le cycle de la figure 5b. La valeur maximale de l'amplitude des impulsions du signal de commande de la pompe est maintenue à 100%, ce qui signifie que la quantité de liquide projeté par unité de temps est la même que dans le cycle de la figure 5a. Ainsi, comme les balais se déplacent moins vite, ils mettent plus de temps à parcourir un secteur angulaire donné et la quantité de liquide projeté sur ce laps de temps est supérieure à celle projetée dans le laps de temps nécessaire aux balais pour parcourir ce même secteur angulaire dans le cas du cycle de la figure 5a. La quantité de liquide projeté sera plus importante à T2=-20°C qu'elle ne l'est à T1=0°C. La quantité de liquide utilisée dépend ainsi de la température extérieure pour optimiser le dégivrage du véhicule sans entraîner une surconsommation du liquide de dégivrage.

Dans le cas de figure précité où les températures T1 et T2 sont respectivement de 0°C et de -20°C, les vitesses des balais peuvent être respectivement de V1 et V2. V1 = k.V2, avec k un coefficient qui est de préférence égal à 2 dans ce cas particulier.

En variante, le boîtier 60 est configuré pour maintenir la quantité Q de liquide projeté constante quelle que soit la température extérieure, de façon à ce que lorsque la température extérieure est égale à T1 et ledit liquide a une viscosité W1, la quantité de liquide Q soit éjectée par les orifices, et lorsque la température extérieure est égale à T2, avec T2 < T1, et le liquide a une viscosité W2, avec W2 > W1, la même quantité de liquide Q soit éjectée par les orifices.

Dans le cas où la figure 4a représenterait un cycle de dégivrage par temps très froid, par exemple à une température T2 de -20°C, le boîtier 60 pourrait être configuré pour mettre en oeuvre le cycle de dégivrage de la figure 4b ou 4c lorsque la température est moins froide, et est par exemple de T1 = 0°C.

Malgré la différence d'amplitude des impulsions expliquée plus haut entre le cycle de dégivrage de la figure 4b et celui de la figure 4a, la quantité de liquide projeté par la pompe est identique pour chaque secteur angulaire dans les deux cycles du fait de la différence de viscosité du liquide aux deux températures considérées.

De la même façon, malgré la différence de largeur des impulsions expliquée plus haut entre le cycle de dégivrage de la figure 4c et celui de la figure 4a, la quantité de liquide projeté par la pompe est identique pour chaque secteur angulaire dans les deux cycles du fait de la différence de viscosité du liquide aux deux températures considérées.

Dans le cas de figure précité où les températures T1 et T2 sont respectivement de 0°C et de -20°C, les quantités de liquide projeté sont identiques et les temps d'activation (largeur des impulsions) de la pompe sont respectivement de t1 et t2. t2 = k.t1, avec k un coefficient qui est de préférence égal à 2 dans ce cas particulier.

Les figures 5a et 5b représentent une variante de réalisation de l'invention, le cycle de la figure 5a étant identique à celui de la figure 4a.

Dans la variante précitée, et dans le cas où la figure 5a représenterait un cycle de dégivrage standard par temps froid, par exemple à une température T1 de 0°C, le boîtier 60 pourrait être configuré pour mettre en oeuvre le cycle de dégivrage de la figure 5b lorsque la température est plus froide, et est par exemple de T2 = -20°C.

Malgré la différence d'amplitude des impulsions expliquée plus haut entre le cycle de dégivrage de la figure 5b et celui de la figure 5a, la quantité de liquide projeté par la pompe est identique pour chaque secteur angulaire dans les deux cycles du fait de la différence de viscosité du liquide aux deux températures considérées.

Dans le cas de figure précité où les températures T1 et T2 sont respectivement de 0°C et de -20°C, les quantités de liquide projeté sont identiques et les vitesses d'entraînement du balai sont respectivement de V1 et V2. V1 = k.V2, avec k un coefficient qui est de préférence égal à 2 dans ce cas particulier.

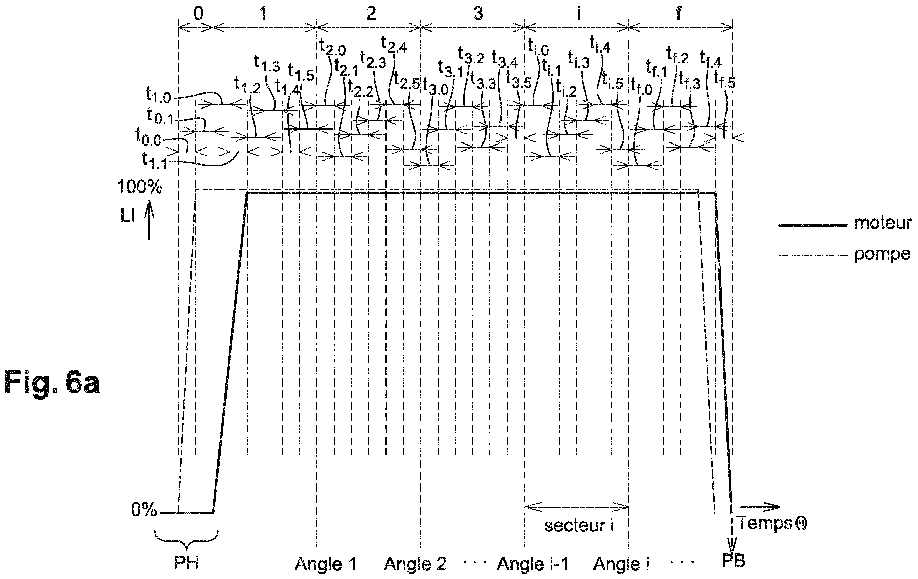

La figure 6a est un graphe qui représente un cycle de dégivrage lors d'une phase de descente d'un balai sur le pare-brise. On voit que la rotation du balai entre sa position haute PH et sa position basse PB est réalisée par un unique déplacement.

Dans la position de repos des balais, au début du cycle d'amorçage, les balais sont immobiles dans leurs positions hautes, le moteur d'entraînement et la pompe d'alimentation étant à l'arrêt du fait d'une amplitude d'impulsion transmise à leur système de commande qui est égale à zéro. Pendant un temps t0.0, alors que le moteur d'entraînement 40 est maintenu à l'arrêt, l'amplitude d'impulsion de la commande de la pompe d'alimentation 22 est progressivement amenée à 100%, cette durée t0.0 correspondant à la vitesse maximale d'accroissement de l'amplitude d'impulsion entre 0 et 100%. Cette amplitude d'impulsion de 100% est maintenue pendant sensiblement toute la durée de la descente. A la fin d'un temps t0.1, le moteur d'entraînement 40 est mis en route par un passage progressif de l'amplitude d'impulsion de son signal de commande de 0 à 100%. L'amplitude d'impulsion de son signal de commande à partir de t1.1 est alors maintenue à 100% pendant sensiblement toute la durée de la descente du ou des balai(s).

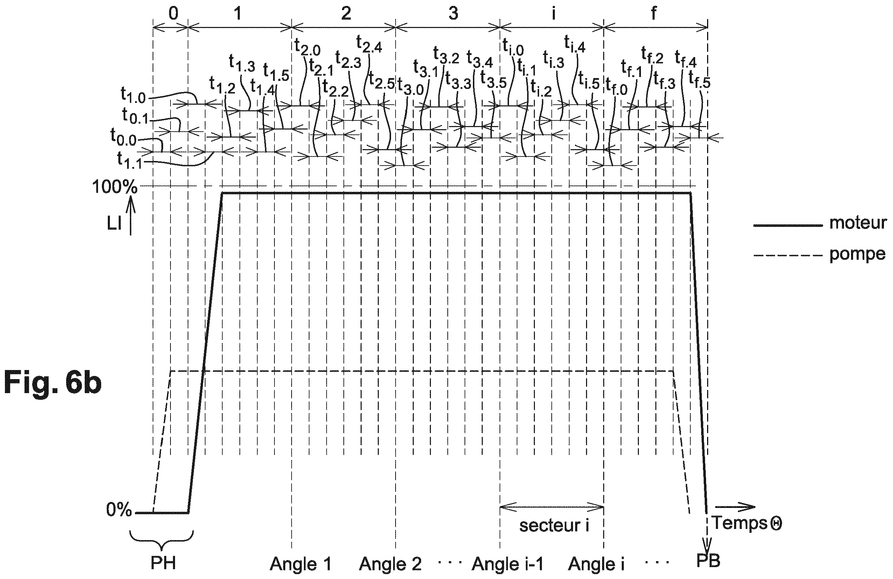

Dans le cas où la figure 6a représenterait un cycle de dégivrage par temps très froid, par exemple à une température T2 de -20°C, le boîtier 60 pourrait être configuré pour mettre en oeuvre le cycle de dégivrage de la figure 6b lorsque la température est moins froide, et est par exemple de T1 = 0°C.

La différence essentielle entre le cycle de dégivrage de la figure 6b et celui de la figure 6a concerne l'amplitude (LI) des impulsions du signal de commande de la pompe. Bien que la valeur maximale de l'amplitude des impulsions du signal de commande du moteur soit maintenue à 100%, comme dans le précédent cycle de la figure 6a, c'est-à-dire que la vitesse de balayage du pare-brise est inchangée, la valeur maximale de l'amplitude des impulsions du signal de commande de la pompe est réduite à 75% (contre 100% dans le cycle de la figure 6a), ce qui se traduit par une quantité de liquide projeté par la pompe qui est plus faible dans le cycle de la figure 6b que dans celui de la figure 6a. Ainsi, lors de la descente des balais, la quantité de liquide projeté sera plus faible à T1=0°C qu'elle ne l'est à T2=-20°C. La quantité de liquide utilisée dépend ainsi de la température extérieure pour optimiser le dégivrage du véhicule sans entraîner une surconsommation du liquide de dégivrage.

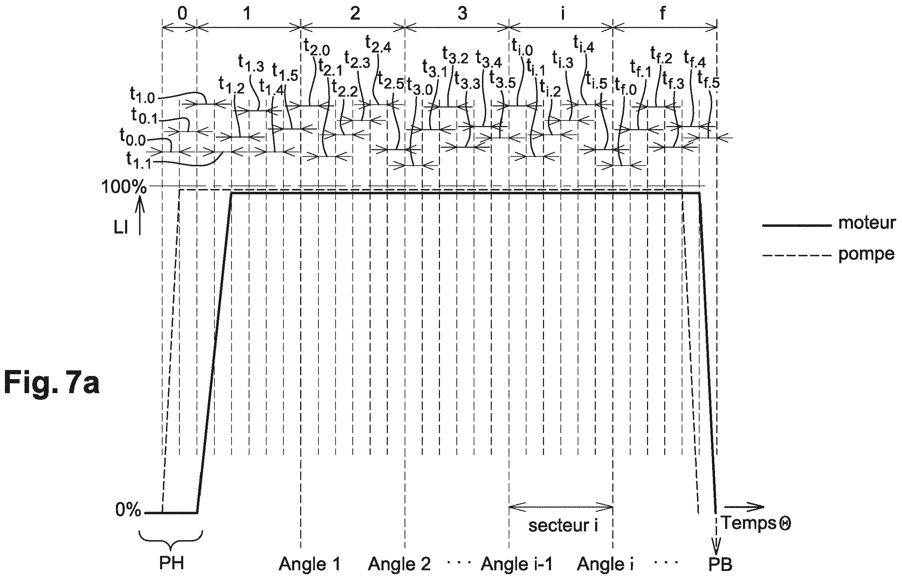

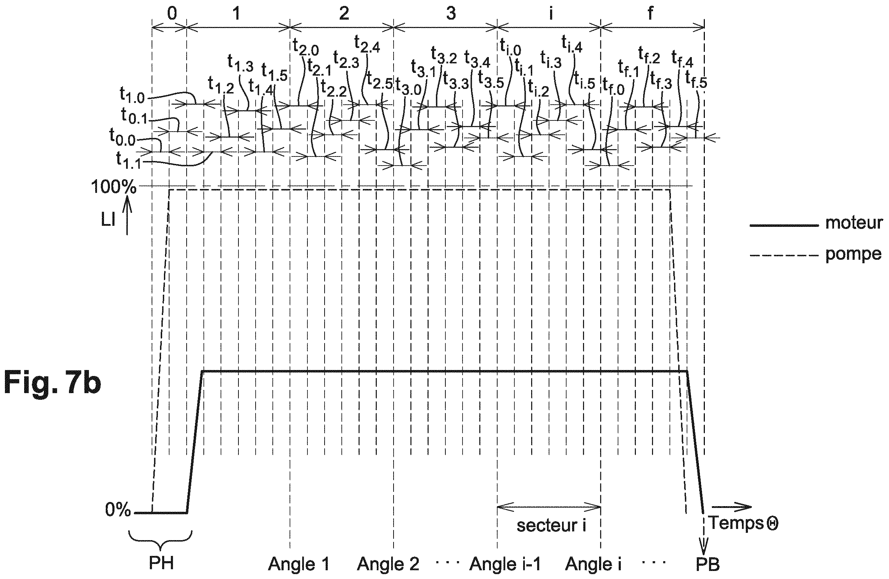

Les figures 7a et 7b représentent une variante de réalisation de l'invention, le cycle de la figure 7a étant identique à celui de la figure 6a.

Dans le cas où la figure 7a représenterait un cycle de dégivrage standard par temps froid, par exemple à une température T1 de 0°C, le boîtier 60 pourrait être configuré pour mettre en oeuvre le cycle de dégivrage de la figure 7b lorsque la température est plus froide, et est par exemple de T2 = -20°C.

La différence essentielle entre le cycle de dégivrage de la figure 7b et celui de la figure 7a concerne les amplitudes (LI) des impulsions des signaux de commande du moteur. La valeur maximale de l'amplitude d'impulsion du signal de commande du moteur est réduite à 75% (contre 100% dans le cycle de la figure 5a), ce qui signifie que la vitesse de balayage du pare-brise est plus faible dans le cycle de la figure 7b. La valeur maximale de l'amplitude d'impulsion du signal de commande de la pompe est maintenue à 100%, ce qui signifie que la quantité de liquide projeté par unité de temps est la même que dans le cycle de la figure 7a. Ainsi, comme les balais se déplacent moins vite, ils mettent plus de temps à descendre sur le pare-brise et la quantité de liquide projeté sur ce laps de temps est supérieure à celle projetée dans le laps de temps nécessaire aux balais pour effectuer la descente dans le cas du cycle de la figure 7a. La quantité de liquide projeté sera plus importante à T2=-20°C qu'elle ne l'est à T1=0°C. La quantité de liquide utilisée dépend ainsi de la température extérieure pour optimiser le dégivrage du véhicule sans entraîner une surconsommation du liquide de dégivrage.

Dans le cas de figure précité où les températures T1 et T2 sont respectivement de 0°C et de -20°C, les vitesses des balais peuvent être respectivement de V1 et V2. V1 = k.V2, avec k un coefficient qui est de préférence égal à 2 dans ce cas particulier.

Les cycles de dégivrage décrits dans ce qui précède sont de préférence mis en oeuvre à l'arrêt du véhicule afin de ne pas perturber la conduite du véhicule.

## Revendications

1. Procédé de dégivrage d'une vitre (10) de véhicule, ledit véhicule étant équipé d'un dispositif de dégivrage (1) comprenant :
h. au moins un réservoir (3) contenant un liquide de dégivrage,
i. un système de canalisation (5) reliant ledit au moins un réservoir à des orifices (15) par lesquels est projeté ledit liquide sur ladite vitre (10),
j. une pompe (22) destinée à faire circuler ledit liquide dans le système de canalisation (5) jusqu'à son éjection par lesdits orifices (15), et
k. au moins un balai d'essuyage (30) apte à se déplacer sur ladite vitre (10) entre une position basse (PB) et une position haute (PH),
l. un moteur (40) d'entraînement en rotation dudit au moins un balai,
m. un capteur (60) de température extérieure T au véhicule, et
n. un boîtier électronique (60) de commande dudit moteur et d'actionnement de ladite pompe,
**caractérisé en ce qu'**il comprend une étape 1) consistant à:
éjecter du liquide par lesdits orifices et adapter la quantité Q de liquide projeté en fonction de ladite température extérieure, de façon à ce que :
- lorsque ladite température extérieure est égale à T1, une quantité Q1 de liquide soit éjectée par lesdits orifices, et
- lorsque la température extérieure est égale à T2, avec T2 < T1, une quantité Q2 de liquide soit éjectée par lesdits orifices, avec Q2 > Q1,
cette étape 1) étant réalisée en régulant une vitesse V de rotation dudit au moins un balai, de façon à ce que :
- lorsque ladite température extérieure est égale à T1, une vitesse V1 est appliquée audit au moins un balai,
- lorsque la température extérieure est égale à T2, une vitesse V2 est appliquée audit au moins un balai, avec V2 < V1 ;
ou l'étape 1) du procédé consiste à éjecter du liquide par lesdits orifices et maintenir la quantité Q de liquide projeté constante quelle que soit ladite température extérieure, de façon à ce que :
- lorsque ladite température extérieure est égale à T1 et ledit liquide a une viscosité W1, la quantité de liquide Q soit éjectée par lesdits orifices, et
- lorsque la température extérieure est égale à T2, avec T2 < T1, et ledit liquide a une viscosité W2, avec W2 > W1, la même quantité de liquide Q soit éjectée par lesdits orifices.

2. Procédé selon la revendication précédente, comprenant une étape consistant à:
2) amener ledit au moins un balai de ladite position basse jusqu'à ladite position haute, par plusieurs déplacements angulaires successifs, lesdites étapes 1) et 2) pouvant notamment se dérouler simultanément.

3. Procédé selon la revendication précédente, dans lequel, ledit moteur étant configuré pour que la vitesse V de rotation dudit au moins un balai et la quantité de liquide éjecté par ladite pompe soient contrôlées par une modulation de la largeur et/ou de l'amplitude d'impulsion de leurs signaux de commande, l'étape 2) est réalisée par plusieurs impulsions successives du signal de commande dudit moteur, et l'étape 1) est réalisée par plusieurs impulsions successives du signal de commande de ladite pompe.

4. Procédé selon la revendication précédente, dans lequel l'adaptation à l'étape 1) est réalisée en régulant la largeur et/ou l'amplitude d'impulsion du signal de commande de ladite pompe, de façon à ce que :
- lorsque ladite température extérieure est égale à T1, la largeur Θ1 et/ou l'amplitude LI1 d'impulsion dudit signal soi(en)t appliquée(s) à ladite pompe,
- lorsque la température extérieure est égale à T2, la largeur Θ2 et/ou l'amplitude LI2 d'impulsion dudit signal soi(en)t appliquée(s) à ladite pompe, avec Θ2 > Θ1 et LI2 > LI1.

5. Procédé selon l'une des revendications précédentes, **caractérisé en ce que** T1 est comprise entre -5°C et +5°C, de préférence entre -2°C et +2°C, et est par exemple de 0°C.

6. Procédé selon l'une des revendications précédentes, **caractérisé en ce que** T2 est comprise entre -10°C et -30°C, de préférence entre -15°C et -25°C, et est par exemple de -20°C.

7. Procédé selon la revendication 6, en dépendance de la revendication 5 et de la revendication 4, dans lequel Θ2 = k.Θ1, avec k un coefficient.

8. Procédé selon la revendication 6, en dépendance de la revendication 5 et de la revendication 1, dans lequel V1 = k.V2, avec k un coefficient.

9. Procédé selon la revendication 7 ou 8, dans lequel k est compris entre 1,5 et 3, et est par exemple de 2.

10. Procédé selon l'une des revendications précédentes, dans lequel les étapes 1) et 2) sont réalisées lorsque le véhicule est à l'arrêt, c'est-à-dire lorsque la vitesse du véhicule est nulle.

11. Procédé selon l'une quelconque des revendications 2 à 11, dans lequel les étapes 1) et 2) sont suivies des étapes consistant à :
3) amener ledit au moins un balai de ladite position haute jusqu'à ladite position basse, par un unique déplacement angulaire, et
4) éjecter du liquide par lesdits orifices pendant ledit déplacement, et adapter la quantité Q de liquide projeté en fonction de ladite température extérieure, de façon à ce que :
- lorsque ladite température extérieure est égale à T1, une quantité Q1 de liquide soit éjectée par lesdits orifices lors dudit déplacement,
- lorsque la température extérieure est égale à T2, avec T2 < T1, une quantité Q2 de liquide soit éjectée par lesdits orifices lors dudit déplacement, avec Q2 > Q1.

12. Procédé selon la revendication précédente, en dépendance de la revendication 3, dans lequel, pendant les étapes 3) et 4), ladite pompe est commandée par une impulsion de son signal de commande de largeur et d'amplitude prédéterminées.

13. Procédé selon la revendication 11 ou 12, en dépendance de la revendication 3, dans lequel, l'adaptation à l'étape 4) est réalisée en régulant la vitesse V de rotation dudit au moins un balai, de façon à ce que :
- lorsque ladite température extérieure est égale à T1, une vitesse V1 est appliquée audit au moins un balai,
- lorsque la température extérieure est égale à T2, une vitesse V2 est appliquée audit au moins un balai, avec V2 < V1.

14. Dispositif de dégivrage d'une vitre de véhicule, comprenant :
a. au moins un réservoir (3) contenant un liquide de dégivrage,
b. un système de canalisation (5) reliant ledit au moins un réservoir à des orifices (15) par lesquels est projeté ledit liquide sur ladite vitre (10),
c. une pompe (22) destinée à faire circuler ledit liquide dans le système de canalisation (5) jusqu'à son éjection par lesdits orifices (15), et
d. au moins un balai d'essuyage (30) apte à se déplacer sur ladite vitre (10) entre une position basse (PB) et une position haute (PH),
e. un moteur (40) d'entraînement en rotation dudit au moins un balai,
f. un capteur de température extérieure T au véhicule, et
g. un boîtier électronique de commande dudit moteur et d'actionnement de ladite pompe,
**caractérisé en ce que** ledit boîtier électronique est configuré pour réaliser les étapes du procédé selon l'une des revendications précédentes.

## Patentansprüche

1. Verfahren zur Enteisung einer Fahrzeugscheibe (10), wobei das Fahrzeug mit einer Enteisungsvorrichtung (1) ausgestattet ist, umfassend:
h. mindestens einen Behälter (3), der eine Enteisungsflüssigkeit enthält,
i. ein Kanalisationssystem (5), das den mindestens einen Behälter mit Öffnungen (15) verbindet, durch welche die Flüssigkeit auf die Scheibe (10) gespritzt wird,
j. eine Pumpe (22), die dazu bestimmt ist, die Flüssigkeit in dem Kanalisationssystem (5) bis zu ihrem Ausstoß aus den Öffnungen (15) zirkulieren zu lassen, und
k. mindestens ein Wischerblatt (30), das dazu geeignet ist, sich auf der Scheibe (10) zwischen einer unteren Position (PB) und einer oberen Position (PH) zu bewegen,
l. einen Drehantriebsmotor (40) des mindestens einen Blatts,
m. einen Sensor (60) der Außentemperatur T des Fahrzeugs, und
n. ein elektronisches Gehäuse (60) zur Steuerung des Motors und zur Betätigung der Pumpe,
**dadurch gekennzeichnet, dass** dieses einen Schritt 1) umfasst, bestehend aus:
Ausstoßen der Flüssigkeit durch die Öffnungen und Einstellen der Menge Q der ausgespritzten Flüssigkeit als Funktion der Außentemperatur, um:
- wenn die Außentemperatur gleich T1 ist, eine Menge Q1 der Flüssigkeit durch die Öffnungen auszustoßen, und
- wenn die Außentemperatur gleich T2 ist, wobei T2 < T1, eine Menge Q2 der Flüssigkeit durch die Öffnungen auszustoßen, wobei Q2 > Q1,
wobei dieser Schritt 1) durch Regeln einer Drehgeschwindigkeit V des mindestens einen Blatts durchgeführt wird, um:
- wenn die Außentemperatur gleich T1 ist, dem mindestens einen Blatt eine Geschwindigkeit V1 zu verleihen,
- wenn die Außentemperatur gleich T2 ist, dem mindestens einen Blatt eine Geschwindigkeit V2 zu verleihen, wobei V2 < V1;
oder der Schritt 1) des Verfahrens besteht aus: Ausstoßen der Flüssigkeit durch die Öffnungen und Halten der Menge Q der ausgespritzten Flüssigkeit konstant ungeachtet der Außentemperatur, um:
- wenn die Außentemperatur gleich T1 ist, und die Flüssigkeit eine Viskosität W1 aufweist, die Menge Q der Flüssigkeit durch die Öffnungen auszustoßen, und
- wenn die Außentemperatur gleich T2 ist, wobei T2 < T1, und die Flüssigkeit eine Viskosität W2 aufweist, wobei W2 > W1, dieselbe Menge Q der Flüssigkeit durch die Öffnungen auszustoßen.

2. Verfahren nach dem vorhergehenden Anspruch, umfassend einen Schritt, bestehend aus:
2) Führen des mindestens einen Blatts von der unteren Position bis zur oberen Position durch mehrere aufeinanderfolgende Winkelbewegungen,
wobei die Schritte 1) und 2) insbesondere gleichzeitig erfolgen können.

3. Verfahren nach dem vorhergehenden Anspruch,
wobei der Motor derart ausgelegt ist, dass die Drehgeschwindigkeit V des mindestens einen Blatts und die von der Pumpe ausgestoßene Menge der Flüssigkeit durch eine Modulation der Impulsbreite und/oder -amplitude ihrer Steuersignale gesteuert werden, wobei der Schritt 2) durch mehrere aufeinanderfolgende Impulse des Steuersignals des Motors durchgeführt wird, und der Schritt 1) durch mehrere aufeinanderfolgende Impulse des Steuersignals der Pumpe durchgeführt wird.

4. Verfahren nach dem vorhergehenden Anspruch,
wobei die Einstellung in Schritt 1) durch Regeln der Impulsbreite und/oder -amplitude des Steuersignals der Pumpe durchgeführt wird, um:
- wenn die Außentemperatur gleich T1 ist, die Impulsbreite Θ1 und/oder -amplitude LI1 des Signals an die Pumpe anzulegen,
- wenn die Außentemperatur gleich T2 ist, die Impulsbreite Θ2 und/oder -amplitude LI2 des Signals an die Pumpe anzulegen, wobei Θ2 > Θ1 und LI2 > LI1.

5. Verfahren nach einem der vorhergehenden Ansprüche,
**dadurch gekennzeichnet, dass** T1 zwischen -5°C und +5°C, vorzugsweise zwischen -2°C und +2°C liegt, und beispielsweise 0°C beträgt.

6. Verfahren nach einem der vorhergehenden Ansprüche,
**dadurch gekennzeichnet, dass** T2 zwischen -10°C und -30°C, vorzugsweise zwischen -15°C und -25°C liegt, und beispielsweise -20°C beträgt.

7. Verfahren nach Anspruch 6, in Abhängigkeit von Anspruch 5 und von Anspruch 4,
wobei Θ2 = k.Θ1, wobei k ein Koeffizient ist.

8. Verfahren nach Anspruch 6, in Abhängigkeit von Anspruch 5 und von Anspruch 1,
wobei V1 = k.V2, wobei k ein Koeffizient ist.

9. Verfahren nach Anspruch 7 oder 8,
wobei k zwischen 1,5 und 3 liegt, und beispielsweise 2 ist.

10. Verfahren nach einem der vorhergehenden Ansprüche, wobei die Schritte 1) und 2) durchgeführt werden, wenn das Fahrzeug steht, das heißt, wenn die Geschwindigkeit des Fahrzeugs Null ist.

11. Verfahren nach einem der Ansprüche 2 bis 11,
wobei die Schritte 1) und 2) von den Schritten gefolgt werden, bestehend aus:
3) Führen des mindestens einen Blatts von der oberen Position bis zur unteren Position durch eine einzige Winkelbewegung, und
4) Ausstoßen der Flüssigkeit durch die Öffnungen während der Bewegung, und Einstellen der Menge Q der ausgespritzten Flüssigkeit als Funktion der Außentemperatur, um:
- wenn die Außentemperatur gleich T1 ist, eine Menge Q1 der Flüssigkeit durch die Öffnungen bei der Bewegung auszustoßen,
- wenn die Außentemperatur gleich T2 ist, wobei T2 < T1, eine Menge Q2 der Flüssigkeit durch die Öffnungen bei der Bewegung auszustoßen, wobei Q2 > Q1.

12. Verfahren nach dem vorhergehenden Anspruch, in Abhängigkeit von Anspruch 3,
wobei, während der Schritte 3) und 4), die Pumpe durch einen Impuls ihres Steuersignals mit vorherbestimmter Breite und Amplitude gesteuert wird.

13. Verfahren nach Anspruch 11 oder 12, in Abhängigkeit von Anspruch 3,
wobei die Einstellung in Schritt 4) durch Regeln der Drehgeschwindigkeit V des mindestens einen Blatts durchgeführt wird, um:
- wenn die Außentemperatur gleich T1 ist, dem mindestens einen Blatt eine Geschwindigkeit V1 zu verleihen,
- wenn die Außentemperatur gleich T2 ist, dem mindestens einen Blatt eine Geschwindigkeit V2 zu verleihen, wobei V2 < V1.

14. Vorrichtung zur Enteisung einer Fahrzeugscheibe, umfassend:
a. mindestens einen Behälter (3), der eine Enteisungsflüssigkeit enthält,
b. ein Kanalisationssystem (5), das den mindestens einen Behälter mit Öffnungen (15) verbindet, durch welche die Flüssigkeit auf die Scheibe (10) gespritzt wird,
c. eine Pumpe (22), die dazu bestimmt ist, die Flüssigkeit in dem Kanalisationssystem (5) bis zu ihrem Ausstoß aus den Öffnungen (15) zirkulieren zu lassen, und
d. mindestens ein Wischerblatt (30), das dazu geeignet ist, sich auf der Scheibe (10) zwischen einer unteren Position (PB) und einer oberen Position (PH) zu bewegen,
e. einen Drehantriebsmotor (40) des mindestens einen Blatts,
f. einen Sensor der Außentemperatur T des Fahrzeugs, und
g. ein elektronisches Gehäuse zur Steuerung des Motors und zur Betätigung der Pumpe,
**dadurch gekennzeichnet, dass** das elektronische Gehäuse ausgelegt ist, die Schritte des Verfahrens nach einem der vorhergehenden Ansprüche durchzuführen.

## Claims

1. Method for de-icing a vehicle window (10), said vehicle being equipped with a de-icing device (1) comprising:
h. at least one tank (3) containing a de-icing liquid,
i. a tube system (5) connecting said at least one tank to openings (15) through which said liquid is sprayed onto said window (10),
j. a pump (22) intended to cause said liquid to circulate in the tube system (5) until it is ejected via said openings (15), and
k. at least one wiper blade (30) able to move on said window (10) between a low position (PB) and a high position (PH),
l. a drive motor (40) for rotation of said at least one blade,
m. a sensor (60) of the temperature T outside the vehicle, and
n. an electronic unit (60) for controlling said motor and actuating said pump,
**characterized in that** it comprises a step 1) consisting in:
ejecting the liquid via said openings and adapting the quantity Q of liquid sprayed as a function of said outside temperature, so that:
- when said outside temperature is equal to T1, a quantity Q1 of liquid is ejected via said openings, and
- when the outside temperature is equal to T2, with T2 < T1, a quantity Q2 of liquid is ejected via said openings, with Q2 > Q1,
- said step 1) being executed by regulating the rotation speed V of said at least one blade, so that:
- when said outside temperature is equal to T1, a speed V1 is applied to said at least one blade,
- when the outside temperature is equal to T2, a speed V2 is applied to said at least one blade, with V2 < V1;
or the step 1) of the method consists in ejecting the liquid via said openings and maintaining the quantity Q of liquid sprayed constant whatever said outside temperature, so that:
- when said outside temperature is equal to T1 and said liquid has a viscosity W1, the quantity Q of liquid is ejected via said openings, and
- when the outside temperature is equal to T2, with T2 < T1, and said liquid has a viscosity W2, with W2 > W1, the same quantity Q of liquid is ejected via said openings.

2. Method according to the preceding claim, comprising a step consisting in:
2) moving said at least one blade from said low position to said high position via a plurality of successive angular movements,
said steps 1) and 2) being notably performable simultaneously.

3. Method according to the preceding claim, wherein, said motor being configured so that the rotation speed V of said at least one blade and the quantity of liquid ejected by said pump are controlled by modulation of the pulse width and/or amplitude of their control signals, the step 2) is executed by a plurality of successive pulses of the control signal of said motor and the step 1) is executed by a plurality of successive pulses of the control signal of said pump.

4. Method according to the preceding claim, wherein the adaptation in the step 1) is executed by regulating the pulse width and/or amplitude of the control signal of said pump, so that:
- when said outside temperature is equal to T1, the pulse width Θ1 and/or the pulse amplitude LI1 of said signal is/are applied to said pump,
- when the outside temperature is equal to T2, the pulse width Θ2 and/or the pulse amplitude LI2 of said signal is/are applied to said pump, with Θ2 > Θ1 and LI2 > LI1.

5. Method according to any one of the preceding claims, **characterized in that** T1 is between -5°C and +5°C inclusive, preferably between -2°C and +2°C inclusive, and is for example 0°C.

6. Method according to any one of the preceding claims, **characterized in that** T2 is between -10°C and -30°C inclusive, preferably between -15°C and -25°C inclusive, and is for example -20°C.

7. Method according to Claim 6, when dependent on Claim 5 and Claim 4, wherein Θ2 = k.Θ1, with k a coefficient.

8. Method according to Claim 6, when dependent on Claim 5 and Claim 1, wherein V1 = k.V2, with k a coefficient.

9. Method according to Claim 7 or 8, wherein k is between 1.5 and 3 inclusive, and is for example 2.

10. Method according to any one of the preceding claims, wherein the steps 1) and 2) are executed when the vehicle is stopped, i.e. when the speed of the vehicle is zero.

11. Method according to any one of Claims 2 to 11, wherein the steps 1) and 2) are followed by step consisting in:
3) moving said at least one blade from said high position to said low position, by means of a single angular movement, and
4) ejecting the liquid via said openings during said movement and adapting the quantity Q of liquid sprayed as a function of said outside temperature, so that:
- when said outside temperature is equal to T1, a quantity Q1 of liquid is ejected via said openings during said movement,
- when the outside temperature is equal to T2, with T2 < T1, a quantity Q2 of liquid is ejected via said openings during said movement, with Q2 > Q1.

12. Method in accordance with the preceding claim, when dependent on claim 3, wherein, during the steps 3) and 4), said pump is controlled by a pulse of its control signal of predetermined width and amplitude.

13. Method according to Claim 12 or 13, when dependent on Claim 3, wherein the adaptation in the step 4) is executed by regulating the rotation speed V of said at least one blade, so that:
- when said outside temperature is equal to T1, a speed V1 is applied to said at least one blade,
- when the outside temperature is equal to T2, a speed V2 is applied to said at least one blade, with V2 < V1.

14. Device for de-icing a vehicle window, comprising:
a. at least one tank (3) containing a de-icing liquid,
b. a tube system (5) connecting said at least one tank to openings (15) through which said liquid is sprayed onto said window (10),
c. a pump (22) intended to cause said liquid to circulate in the tube system (5) until it is ejected via said openings (15), and
d. at least one wiper blade (30) able to move on said window (10) between a low position (PB) and a high position (PH),
e. a drive motor (40) for rotation of said at least one blade,
f. a sensor of the temperature T outside the vehicle, and
g. an electronic unit for controlling said motor and actuating said pump, **characterized in that** said electronic unit is configured to execute the steps of the method according to any one of the preceding claims.
